(19) Europäisches Patentamt

European Patent Office

Office européen des brevets

(11) **EP 3 110 756 B1**

(12) **EUROPEAN PATENT SPECIFICATION**

(45) Date of publication and mention
of the grant of the patent:
**10.04.2019 Bulletin 2019/15**

(21) Application number: **15708776.8**

(22) Date of filing: **26.02.2015**

(51) Int Cl.:
**C01B 33/193** *(2006.01)*     **C01B 33/18** *(2006.01)*
**C09C 1/30** *(2006.01)*     **C08K 9/04** *(2006.01)*
**C08K 3/36** *(2006.01)*     **C04B 14/06** *(2006.01)*

(86) International application number:
**PCT/EP2015/053987**

(87) International publication number:
**WO 2015/128401 (03.09.2015 Gazette 2015/35)**

(54) **PROCESS FOR THE PREPARATION OF MODIFIED SILICA, MODIFIED SILICA AND ITS USES, IN PARTICULAR FOR THE REINFORCEMENT OF POLYMERS**

VERFAHREN ZUR HERSTELLUNG VON MODIFIZIERTER KIESELSÄURE, MODIFIZIERTE KIESELSÄURE UND DEREN VERWENDUNGEN, INSBESONDERE ZUR VERSTÄRKUNG VON POLYMEREN

PROCÉDÉ DE PRÉPARATION DE SILICE MODIFIÉE, SILICE MODIFIÉE ET SES UTILISATIONS, NOTAMMENT POUR LE RENFORCEMENT DE POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2014 EP 14305290**

(43) Date of publication of application:
**04.01.2017 Bulletin 2017/01**

(73) Proprietor: **Rhodia Operations**
**75009 Paris (FR)**

(72) Inventors:
• **GUY, Laurent**
  **69140 Rillieux-la-Pape (FR)**
• **NEVEU, Sylvaine**
  **75005 Paris (FR)**
• **PINAULT, Anne-Laure**
  **94260 Fresnes (FR)**
• **PERIN, Eric**
  **69400 Villefranche Sur Saône (FR)**
• **BOIVIN, Cédric**
  **69380 Chasselay (FR)**

(74) Representative: **Ferri, Isabella et al**
**Solvay S.A.**
**Viale Lombardia, 20**
**20021 Bollate (MI) (IT)**

(56) References cited:
**WO-A1-99/52979     US-A- 5 800 608**
**US-A- 6 150 434     US-A1- 2009 214 449**

• **MIZUKAMI ET AL: "Preparation of silicas combined with optically active organic compounds: optical resolution of metal chelate complexes on the silica composites", JOURNAL OF CHROMATOGRAPHY, ELSEVIER SCIENCE PUBLISHERS B.V, NL, vol. 697, no. 1-2, 21 April 1995 (1995-04-21), pages 279-287, XP005607235, ISSN: 0021-9673, DOI: 10.1016/0021-9673(94)00751-T**
• **PETER MAJEWSKI ET AL: "COOH-functionalisation of silica particles", APPLIED SURFACE SCIENCE, ELSEVIER, AMSTERDAM, NL, vol. 257, no. 22, 29 April 2011 (2011-04-29), pages 9282-9286, XP028256488, ISSN: 0169-4332, DOI: 10.1016/J.APSUSC.2011.04.145 [retrieved on 2011-06-17]**

EP 3 110 756 B1

**Description**

**Technical Field**

The present invention relates to a process for the preparation of modified silica, to modified silica and its applications, such as reinforcing filler in polymers. In particular the present invention relates to a process for the modification of precipitated silica comprising the use of polycarboxylic acids.

**Background Art**

Silica has long been used as white reinforcing filler in polymeric materials and, in particular, in elastomers.

It has now been found that the adsorption of certain polycarboxylic acids on silica, in particular precipitated silica, improves the use of said precipitated silica in polymeric compositions. In particular it has been found that said modified silica provides reduced melt viscosity to polymeric compositions without compromising the dynamic and mechanical properties of the same.

The use of carboxylic acids in a process for the manufacture of precipitated silica has been previously disclosed. For instance US5800608 discloses a process wherein the aluminium salt of carboxylic or polycarboxylic acids may be added to the reaction medium during the silica precipitation process. US2009214449 discloses the addition of a carboxylic acid to the precipitated silica before or after the step of disintegration of the filter cake.

WO 99/52979 discloses a free flowing particulate composition comprising particulate amorphous precipitated silica; a hydrocarbon process oil; and an organic carboxylic acid having from 2 to 30 carbon atoms. The hydrocarbon process oil and the organic carboxylic acid are sorbed on the precipitated silica.

**Summary of invention**

A first object of the present invention is a process for the preparation of a modified silica comprising the steps of:

- providing a precipitated silica; and
- adsorbing at least one polycarboxylic acid on said precipitated silica.

The expression "silica" is used herein to refer to silicon dioxide, $SiO_2$. The silica is precipitated silica. The expression "precipitated silica" is used to refer to a synthetic amorphous silica, typically obtained by a process wherein a silicate is precipitated with an acidifying agent.

According to a general process, precipitated silica is prepared by means of a reaction whereby a silicate, such as the silicate of an alkaline metal, for instance sodium silicate, is precipitated with an acidifying agent, such as sulfuric acid, followed by separation of the resulting solid by filtration. A filter cake is thus obtained which is dried, generally by atomization.

Several methods can be employed for the precipitation of silica: notably, the addition of an acidifying agent to a sediment of the silicate, or simultaneous addition, partial or total, of an acidifying agent and of the silicate to water or to a silicate sediment already present in the vessel.

Notable, non-limiting examples of suitable processes for the preparation of precipitated silica are disclosed for instance in EP396450A, EP520862A, EP647591A, EP670813A, EP670814A, EP901986A, EP762992A, EP762993A, EP917519A, EP983966A, EP1355856A, WO03/016215, WO2009/112458, WO2011/117400.

Any precipitated silica may be used in the inventive process. Mention may be made for instance of the following commercially available precipitated silicas: Zeosil® 1165MP, Zeosil® 1115MP, Zeosil® Premium 200MP, Zeosil® 1085GR, Zeosil® 195HR, Zeosil® 165GR, Zeosil® 115GR, Zeosil® HRS 1200MP, Zeosil® 195GR, Zeosil® 185GR, Zeosil® 175GR, Zeosil® 125GR (all commercially available from Solvay), Ultrasil® 5000GR, Ultrasil® 7000GR, Ultrasil® 9000GR, Ultrasil® VN3GR, Hi-Sil® EZ 160G-D, Hi-Sil® EZ 150G, Hi-Sil® 190G, Hi-Sil® 200G-D, Hi-Sil® HDP-320G, Hi-Sil® 255CG-D, Zeopol® 8755LS, Zeopol® 8745, Newsil® 115GR, Newsil® 2000MP, Tokusil® 315.

Typically the silica is in the form of a powder, granules, or substantially spherical beads.

Typically, the mean average size of said beads is of at least 50 $\mu$m, preferably of at least 80 $\mu$m, especially at least 100 $\mu$m, for example at least 150 $\mu$m. The mean average size of the beads is generally not more than 300 $\mu$m or even not more than 270 $\mu$m. The mean size is determined according to standard NF X 11507 (December 1970) by dry sieving and determination of the diameter corresponding to a cumulative oversize of 50%.

When in the form of a powder, the mean average size is of at least 3 $\mu$m, preferably of at least 10 $\mu$m, especially at least 15 $\mu$m. The mean average size may advantageously be comprised between 15 and 60 $\mu$m.

Granules generally have a size of at least 1 mm, for instance comprised between 1 and 10 mm along the major dimension.

The precipitated silica typically has a BET specific surface of at least 45 m$^2$/g, in particular of at least 60 m$^2$/g and preferably of at least 75 m$^2$/g. In some embodiments the BET specific surface may be even of at least 100 m$^2$/g, preferably of at least 120 m$^2$/g, and more preferably of at least 130 m$^2$/g.

The BET specific surface generally is at most 700 m$^2$/g, generally at most 550 m$^2$/g, in particular at most 370 m$^2$/g, and even at most 300 m$^2$/g.

In some embodiments, the BET specific surface may be at most 240 m$^2$/g, in particular at most 190 m$^2$/g, and even at most 170 m$^2$/g. The BET specific surface is determined according to the Brunauer - Emmett - Teller method described in The Journal of the American Chemical Society, Vol. 60, page 309, February 1938, and corresponding to the standard NF ISO 5794-1, Appendix D (June 2010).

In general, the precipitated silica has a CTAB specific surface of between 40 and 650 m$^2$/g, in particular between 70 and 450 m$^2$/g. In some embodiments CTAB specific surface may be between 80 and 310 m$^2$/g, for example between 100 and 240 m$^2$/g. The CTAB specific surface can in particular be between 130 and 200 m$^2$/g, for example between 140 and 190 m$^2$/g. The CTAB specific surface is the external surface, which can be determined according to the standard NF ISO 5794-1, Appendix G (June 2010).

The precipitated silica used in the inventive process, independently for its form, e.g. substantially spherical beads, powder or granules, may have a pore distribution, hereinafter referred to as V2/V1, such that the pore volume generated by the pores having a diameter of between 175 and 275 Å (V2) represents at least 50%, in particular at least 55%, especially between 55% and 75%, for example between 55% and 70%, of the pore volume generated by the pores with diameters of less than or equal to 400 Å (V1). The latter volume corresponds to the useful pore volume of the fillers employed in the reinforcement of elastomers. When the precipitated silica according to the invention is provided in the form of granules, it can optionally have a pore distribution such that the pore volume generated by the pores having a diameter of between 175 and 275 Å (V2) represents at least 60% of the pore volume generated by the pores with diameters of less than or equal to 400 Å (V1).

Alternatively, the precipitated silica may have a pore distribution such that the pore volume generated by the pores having a diameter of between 175 and 275 Å (V2) represents less than 50% of the pore volume generated by the pores with diameters of less than or equal to 400 Å (V1), typically less than 50% and at least 20%.

The pore volumes and pore diameters are typically measured by mercury porosimetry using a Micromeritics Autopore 9520 porosimeter and are calculated by the Washburn relationship with a contact angle theta equal to 130° and a surface tension gamma equal to 484 dynes/cm (standard DIN 66133). Each sample is pre-dried in an oven at 200°C for 2 hours before measurement is carried out.

According to the process of the invention at least one polycarboxylic acid is adsorbed on the precipitated silica as above defined. Adsorption may be conveniently carried out according to any means known in the art.

In an embodiment of the process, adsorption is obtained by impregnating granules or beads of the precipitated silica with the at least one polycarboxylic acid in the liquid state or in a form in which it is dispersed or in solution in a solvent.

The step of impregnating the granules or beads with the at least one polycarboxylic acid may be carried out using any suitable equipment. For instance, the liquid polycarboxylic acid or its dispersion or solution may be sprayed onto the silica maintained under suitable agitation. A mixer or an internal blender of the Brabender type may be used for the impregnation.

After the liquid polycarboxylic acid or its dispersion or solution has been contacted with the silica, drying may be optionally carried out. Drying may be particularly advantageous when the at least one polycarboxylic acid is under the form of a dispersion or solution in a liquid carrier, either aqueous or organic. In this latter case the solvent is typically removed by evaporation.

At the end of the inventive process, at least one polycarboxylic acid is adsorbed on the precipitated silica.

The expression "polycarboxylic acid" is used herein to refer to carboxylic acids comprising at least two carboxylic acids functional groups. The expression "carboxylic acid functional group" is used herein in its customary meaning, to refer to the -COOH functional group.

Polycarboxylic acids suitable for the process of the invention may have two, three, four or even more than four carboxylic acid functional groups. Preferably, the polycarboxylic acids suitable for the process of the invention are selected from the group consisting of the dicarboxylic acids and the tricarboxylic acids.

Suitable polycarboxylic acids are linear or branched, saturated or unsaturated, aliphatic polycarboxylic acids having from 2 to 20 carbon atoms or aromatic polycarboxylic acids. The polycarboxylic acids may optionally comprise hydroxy functional groups and/or halogen atoms. Typically, the polycarboxylic acids are selected from the group consisting of the linear or branched, saturated or unsaturated, aliphatic polycarboxylic acids having from 2 to 16 carbon atoms and of the aromatic polycarboxylic acids.

Among the aliphatic polycarboxylic acids mention may be made of the linear polycarboxylic acids, saturated or unsaturated, having from 2 to 14 carbon atoms, preferably having from 2 to 12 carbon atoms. Suitable polycarboxylic acids may have 2, 3, 4, 5, 6, 7, 8, 9, 10, 11 or 12 carbon atoms. Suitable polycarboxylic acids may advantageously have 4, 5, 6, 7, 8, 9 or 10 carbon atoms, preferably 4, 5, 6, 7, or 8 carbon atoms. For instance the polycarboxylic acid may have 4, 5 or 6 carbon atoms.

Notable, non-limiting examples of suitable linear aliphatic polycarboxylic acids are the acids selected from the group consisting of oxalic acid, malonic acid, tricarballylic acid, succinic acid, glutaric acid, adipic acid, pimelic acid, suberic acid, azelaic acid, sebacic acid.

Among branched polycarboxylic acids mention may be made of methylsuccinic acid, ethylsuccinic acid, oxalosuccinic acid, methylglutaric acid, dimethylglutaric acid, methyladipic acid. For the avoidance of doubt, the expression "methylglutaric acid" is used herein to indicate both 2-methylglutaric acid and 3-methylglutaric acid, as well as mixtures of the two isomers in any proportion. The expression "2-methylglutaric acid" is used herein to indicate both the (S) and (R) forms of the compound as well as their racemic mixture.

Among the unsaturated polycarboxylic acids mention may be made of maleic acid, fumaric acid, itaconic acid, muconic acid, aconitic acid, traumatic acid, glutaconic acid.

Among polycarboxylic acids comprising hydroxyl functional groups mention may be made of malic acid, citric acid, isocitric acid, tartaric acid.

Among the aromatic polycarboxylic acids, mention may be made of the phthalic acids, namely phthalic acid, ortophthalic acid and isophthalic acid, trimesic acid, trimellitic acid.

Preferably the at least one polycarboxylic acid for the process of the invention is selected from the group consisting of oxalic acid, malonic acid, tricarballylic acid, succinic acid, glutaric acid, adipic acid, pimelic acid, suberic acid, azelaic acid, sebacic acid, methylsuccinic acid, ethylsuccinic acid, methylglutaric acid, dimethylglutaric acid, malic acid, citric acid, isocitric acid, tartaric acid.

The at least one polycarboxylic acid may be conveniently selected from the group consisting of adipic acid, succinic acid, ethylsuccinic acid, glutaric acid, methylglutaric acid, oxalic acid and citric acid.

Alternatively, the at least one polycarboxylic acid may be selected from the group consisting of oxalic acid, malonic acid, tricarballylic acid, succinic acid, glutaric acid, adipic acid, pimelic acid, suberic acid, azelaic acid, sebacic acid, methylsuccinic acid, ethylsuccinic acid, methylglutaric acid, dimethylglutaric acid, malic acid, citric acid, isocitric acid, tartaric acid. Preferably, the at least one polycarboxylic acid may be selected from the group consisting of oxalic acid, malonic acid, succinic acid, glutaric acid, adipic acid, pimelic acid, suberic acid, azelaic acid, sebacic acid, methylsuccinic acid, ethylsuccinic acid, methylglutaric acid, dimethylglutaric acid, malic acid, citric acid, isocitric acid, tartaric acid. Even more preferably the at least one polycarboxylic acid may be selected from the group consisting of succinic acid, glutaric acid, adipic acid, pimelic acid, suberic acid, azelaic acid, sebacic acid, methylsuccinic acid, ethylsuccinic acid, methylglutaric acid, dimethylglutaric acid, malic acid, citric acid, isocitric acid, tartaric acid.

In an aspect of the embodiment only one polycarboxylic, is adsorbed on the silica. Said polycarboxylic acid can be selected from the list of polycarboxylic acids defined above. Preferably it is selected from the group consisting of succinic acid, glutaric acid, adipic acid, pimelic acid, suberic acid, azelaic acid, sebacic acid, methylsuccinic acid, ethylsuccinic acid, methylglutaric acid, dimethylglutaric acid, methyladipic acid, malic acid, citric acid, isocitric acid, tartaric acid. More preferably it is selected from the group consisting of succinic acid, glutaric acid, adipic acid, methylsuccinic acid, ethylsuccinic acid, methylglutaric acid, dimethylglutaric acid, methyladipic acid, citric acid, isocitric acid, tartaric acid.

In another aspect of the embodiment, a mixture of at least two polycarboxylic acids, as defined above is adsorbed on the silica. The mixture may comprise two, three, four or even more than four polycarboxylic acids. Preferably, the mixture comprises three polycarboxylic acids as defined above. More preferably, the mixture comprises three polycarboxylic acids selected from the group consisting of the dicarboxylic acids and the tricarboxylic acids.

In an advantageous embodiment, the mixture comprises three polycarboxylic acids, preferably three dicarboxylic acids. Typically, the mixture consists of three dicarboxylic acids, although impurities may be present in an amount typically not exceeding 2.00 wt% of the total mixture of polycarboxylic acids.

In a first aspect of said embodiment, the mixture comprises adipic acid, glutaric acid and succinic acid. The three acids may be present in the mixture in any proportion.

Typically, the amount of adipic acid in the mixture is equal to or greater than 15.00 wt%, preferably equal to or greater than 20.00 wt%; the amount of adipic acid is generally equal to or less than 35.00 wt%, preferably equal to less than 30.00 wt%.

The amount of glutaric acid is typically equal to or greater than 40.00 wt%, preferably equal to or greater than 45.00 wt% and equal to or less than 65.00 wt%, preferably equal to or less than 60.00 wt%.

The amount of succinic acid in the mixture is equal to or greater than 13.00 wt%, preferably equal to or greater than 15.00 wt% and equal to or less than to 28.00 wt%, preferably equal to or less than 25.00 wt%. The percentages are referred to the total amount of polycarboxylic acids in the mixture. Such a mixture may advantageously be obtained from a process for the manufacture of adipic acid.

In a second aspect of said embodiment, the mixture comprises methylglutaric acid, ethylsuccinic acid and adipic acid. The three acids may be present in the mixture in any proportion.

Preferably, the mixture comprises a major proportion of methylglutaric acid with respect to the total combined weight of ethylsuccinic acid and adipic acid. Typically, the amount of methylglutaric acid in the mixture is at least 50.00 wt%; preferably it is equal to or greater than 60.00 wt%, more preferably equal to or greater than 80.00 wt%, more preferably equal to or greater than 90.00 wt%. The amount of methylglutaric acid in the mixture is equal to or less than 97.00 wt%, preferably equal to less than 96.00 wt%, more preferably equal to less than 95.50 wt%.

The amount of ethylsuccinic acid is generally equal to or greater than 3.00 wt%, preferably equal to or greater than 3.50 wt%, more preferably equal to or greater than 3.90 wt% and equal to or less than 20.00 wt%, preferably equal to or less than 12.00 wt%, more preferably equal to or less than 9.70 wt%.

The amount of adipic acid in the mixture is equal to or greater than 0.05, preferably equal to or greater than 0.08 wt%, more preferably equal to or greater than 0.10 wt% and equal to or less than to 20.00 wt%, preferably equal to or less than 10.00 wt%, more preferably equal to or less than 5.00 wt%.

The methylglutaric acid in the mixture may be 2-methylglutaric acid. Alternatively, the methylglutaric acid may be 3-methylglutaric acid. Still alternatively, the methylglutaric acid in the mixture may be a mixture of 2-methylglutaric acid and 3-methylglutaric acid, in any proportion of the two.

The mixture of polycarboxylic acids defined above may advantageously be obtained by hydrolysis, acid or basic, of a mixture comprising methylglutaronitrile, ethylsuccinonitrile and adiponitrile. Said mixture may conveniently derive from the process of preparation of adiponitrile by hydrocyanation of butadiene as known in the art.

In any of embodiments described above, a part or the totality of the carboxylic acid functional groups may be in the form of a carboxylic acid derivative, namely in the form of an anhydride, ester, or salt, for instance the salt of an alkaline metal (e.g. sodium or potassium) or an ammonium salt. The term "carboxylate" will be used hereinafter to indicate the derivatives of the carboxylic acid functional groups as defined above.

Thus, in a first embodiment, the mixture of polycarboxylic acids used in the process of the invention may comprise:

- methylglutaric acid, typically from 60.00 to 96.00 wt%, for instance from 90.00 to 95.50 wt%;
- ethylsuccinic anhydride, typically from 3.50 to 20.00 wt%, for instance from 3.90 to 9.70 wt%; and
- adipic acid, typically from 0.05 to 20.00 wt%, for instance from 0.10 to 0.30 wt%.

In an alternative, advantageous composition the mixture of polycarboxylic acids used in the process of the invention may comprise:

- methylglutaric acid, typically from 10.00 to 50.00 wt%, for instance from 25.00 to 40.00 wt%;
- methylglutaric anhydride, typically from 40.00 to 80.00 wt%, for instance from 55.00 to 70.00 wt%;
- ethylsuccinic anhydride, typically from 3.50 to 20.00 wt%, for instance from 3.90 to 9.70 wt%; and
- adipic acid, typically from 0.05 to 20.00 wt%, for instance from 0.10 to 0.30 wt%.

In the above composition methylglutaric anhydride may be 2-methylglutaric anhydride, 3-methylglutaric anhydride or a mixture of the two.

The at least one polycarboxylic acid used in the invention may optionally be neutralised, for instance by reaction with a base such as NaOH or KOH, before being used in the inventive process. This allows modifying the pH of the resulting silica.

The amount of the at least one polycarboxylic acid added to the silica in the inventive process is such that, in the final product, the total content (C) of the at least one polycarboxylic acid and/or of its corresponding carboxylate, expressed as total carbon, is of at least 0.15% by weight with respect to the amount of silica (expressed as $SiO_2$). The total content (C) of the at least one polycarboxylic acid and/or of its corresponding carboxylate is preferably of at least 0.20% by weight. The total content (C) of the at least one polycarboxylic acid and/or corresponding carboxylate can be of at least 0.25% by weight, in particular of at least 0.30% by weight, for example of at least 0.35% by weight, indeed even of at least 0.45% by weight. The total content (C) of the at least one polycarboxylic acid and/or corresponding carboxylate, expressed as total carbon is not particularly limited, although it typically does not exceed 10.00% by weight, in particular it does not exceed 5.00% by weight, more generally it does not exceed 1.50% by weight or even 1.00% by weight.

The total content of the at least one polycarboxylic acid and/or of the corresponding carboxylate, denoted (C), expressed as total carbon, can be measured on the modified silica using a carbon/sulfur analyzer, such as the Horiba EMIA 320 V2. The principle of the carbon/sulfur analyzer is based on the combustion of a solid sample in a stream of oxygen in an induction furnace (adjusted to approximately 170 mA) and in the presence of combustion accelerators (approximately 2 grams of tungsten (in particular Lecocel 763-266) and approximately 1 gram of iron). The carbon present in the sample to be analyzed (weight of approximately 0.2 gram) combines with the oxygen to form $CO_2$, CO. These gases are subsequently analyzed by an infrared detector. The moisture from the sample and the water produced during these oxidation reactions is removed by passing over a cartridge comprising a dehydrating agent (magnesium perchlorate) in order not to interfere with the infrared measurement. The result is expressed as percentage by weight of element carbon.

The presence of the polycarboxylic acid(s) and/or of the corresponding carboxylate at the surface of the silica can be determined by the presence of shoulders characteristic of the C-O and C=O bonds, visible in the infrared spectra, obtained in particular by surface (transmission) infrared or diamond-ATR infrared (in particular between 1540 and 1590 $cm^{-1}$ and between 1380 and 1420 $cm^{-1}$ for C-O, and between 1700 and 1750 $cm^{-1}$ for C=O). The surface infrared analysis (by transmission) may be carried out on a Bruker Equinox 55 spectrometer on a pellet of pure product. The pellet is typically obtained after grinding the silica as is in an agate mortar and pelleting at 2 $T/cm^2$ for 10 seconds. The diameter of the pellet is generally 17 mm. The weight of the pellet is between 10 and 20 mg. The pellet thus obtained is placed in the high vacuum chamber ($10^{-7}$ mbar) of the spectrometer for one hour at ambient temperature before the analysis by transmission. Acquisition takes place under high vacuum (acquisition conditions: from 400 $cm^{-1}$ to 6000 $cm^{-1}$; number of scans: 100; resolution: 2 $cm^{-1}$).

The diamond-ATR analysis, may be carried out on a Bruker Tensor 27 spectrometer, and it consists in depositing, on the diamond, a spatula tip of pre-ground silica in an agate mortar and in then exerting a pressure. The infrared spectrum is recorded on the spectrometer in 20 scans, from 650 $cm^{-1}$ to 4000 $cm^{-1}$. The resolution is 4 $cm^{-1}$.

The invention also relates to the modified silica obtained by the process according to the invention.

In general, the modified silica of the invention exhibits, on its surface, molecules of the at least one polycarboxylic acid and/or of the corresponding carboxylate employed in the process.

Accordingly, a further object of the present invention is thus a modified silica comprising at least one polycarboxylic acid, or derivative thereof, adsorbed on its surface. The expression "modified silica" is used herein to refer to modified precipitated silica.

The modified silica has a total content (C) of the at least one polycarboxylic acid and/or of its corresponding carboxylate is preferably of at least 0.20% by weight. The total content (C) of the at least one polycarboxylic acid and/or corresponding carboxylate can be of at least 0.25% by weight, in particular of at least 0.30% by weight, for example of at least 0.35% by weight, indeed even of at least 0.45% by weight. The total content (C) of the at least one polycarboxylic acid and/or corresponding carboxylate, expressed as total carbon is not particularly limited, although it typically does not exceed 10.00% weight, in particular it does not exceed 5.00% by weight, more generally it does not exceed 1.50% by weight or even 1.00% by weight.

It has generally been observed that the specific surface area (BET and CTAB) as well as the pore size and pore size distribution of the modified silica are substantially the same as those of the originating silica. Other structural properties of the precipitated silica are generally not affected by the process. Similarly dopants, e.g. Al, originally present in the precipitated silica will be present in the modified silica.

The modified silica may be generally characterised by a lower value of the dispersive component of the surface energy $\gamma_s^d$ with respect to the originating silica.

The dispersive component of the surface energy $\gamma_s^d$ is determined by inverse gas chromatography on granules, having an average size of 106 $\mu$m - 250 $\mu$m.

The technique used to calculate the dispersive component of the surface energy $\gamma_s^d$ is Inverse Gas Chromatography at Infinite Dilution (IGC-ID) at 110°C using a series of alkanes (normal alkanes) ranging from 6 to 10 carbon atoms, a technique based on gas chromatography but where the roles of the mobile phase and of the stationary phase (packing) are reversed. In this instance, the stationary phase in the column is replaced by the (solid) material to be analyzed, in this instance the precipitated silica. With regard to the mobile phase, it consists of the carrier gas (helium) and of the "probe" molecules chosen as a function of their interaction capability. The measurements are successively carried out with each probe molecule. For each measurement, each probe molecule is injected into the column, in a very small amount (infinite dilution), as a mixture with methane. Methane is used to determine $t_0$, the dead time of the column.

The net retention time ($t_N$) of the injected probe is obtained by subtraction of the dead time to from the retention time of the probe. Physically, $t_N$ corresponds to the mean time which the probe molecule has spent in contact with the stationary phase (the solid analyzed). For each probe molecule injected, three net retention times $t_N$ are measured. The mean value and the corresponding standard deviation are used to determine the specific retention volumes ($V_g^0$) on the basis of the following relationship (formula [1]).

$$V_g^0 = \frac{D_c t_N}{M_S} \times \frac{273.15}{T}$$

formula [1]

The specific retention volume $V_g^0$ corresponds to the volume of carrier gas (referred to 0°C) necessary to elute the probe molecule per 1 gram of stationary phase (solid examined). This standard quantity makes it possible to compare the results, whatever the flow rate of carrier gas and the weight of stationary phase used. In formula [1]: $M_s$ the weight of solid in the column, $D_c$ the flow rate of carrier gas and $T$ the measurement temperature.

The specific retention volume is subsequently used to calculate $\Delta G_a$, the variation in free enthalpy of adsorption of the probe, according to the formula [2], wherein R is the universal ideal gas constant (R = 8.314 J.K$^{-1}$.mol$^{-1}$), on the solid present in the column.

$$\Delta G_a = RTLn(V_g^0) \qquad \text{formula [2]}$$

This quantity $\Delta G_a$ is the starting point for the determination of the dispersive component of the surface energy ($\gamma_s^d$). The latter is obtained by plotting the straight line representing the variation in free enthalpy of absorption ($\Delta G_a$) as a function of the carbon number $n_c$ of the n-alkane probes, as shown in the table below.

**Table 1**

| n-Alkane probes | $n_c$ |
|---|---|
| n-hexane | 6 |
| n-heptane | 7 |
| n-octane | 8 |
| n-nonane | 9 |
| n-decane | 10 |

It is then possible to determine the dispersive component of the surface energy $\gamma_s^d$ from the slope $\Delta G_a^{CH2}$ of the straight line of the normal alkanes, corresponding to the free enthalpy of adsorption of the methylene group, obtained for a measurement temperature of 110°C.

The dispersive component of the surface energy $\gamma_s^d$ is then related to the free enthalpy of adsorption $\Delta G_a^{CH2}$ of the methylene group (Dorris and Gray method, J. Colloid Interface Sci., 77 (180), 353-362) by the following relationship:

$$\gamma_S^d = \frac{(\Delta G_a^{CH_2})^2}{4 N_A^2 . a_{CH_2}^2 . \gamma_{CH_2}}$$

wherein $N_A$ is Avogadro's number (6.02 x 10$^{23}$ mol$^{-1}$), $\alpha_{CH2}$ is the area occupied by an adsorbed methylene group (0.06 nm$^2$) and $\gamma_{CH2}$ is the surface energy of a solid consisting solely of methylene group and determined on polyethylene (35.6 mJ/m$^2$ at 20°C).

All definitions and preferences concerning the nature of the at least one polycarboxylic acid, its derivatives and the mixtures defined above in respect of the process for making the modified silica equally apply to the modified silica of the invention.

The modified silica according to the present invention or obtained by the process according to the invention described above can be used in numerous applications.

The modified silica can be employed, for example, as catalyst support, as absorbent for active materials (in particular support for liquids, especially used in food, such as vitamins (vitamin E) or choline chloride), in polymer, especially elastomer, compositions, as viscosifying, texturizing or anticaking agent, as battery separator component, or as additive for toothpaste, concrete or paper.

The modified silica of the invention can be used in particular as filler for polymer compositions, advantageously providing them with a reduction in melt viscosity. The dynamic and mechanical properties of said polymer compositions are generally maintained unaltered, when not improved, over those of corresponding polymer compositions comprising silica of the prior art.

The polymer compositions in which it can be employed, in particular as reinforcing filler, are generally based on one or more polymers or copolymers, in particular on one or more elastomers, preferably exhibiting at least one glass transition temperature of between -150°C and +300°C, for example between -150°C and +20°C.

The expression "copolymer" is used herein to refer to polymers comprising recurring units deriving from at least two monomeric units of different nature.

Mention may in particular be made, as possible polymers, of diene polymers, in particular diene elastomers.

For example, use may be made of polymers or copolymers deriving from aliphatic or aromatic monomers, comprising at least one unsaturation (such as, in particular, ethylene, propylene, butadiene, isoprene, styrene, acrylonitrile, isobutylene or vinyl acetate), polybutyl acrylate, or their mixtures; mention may also be made of functionalized elastomers, that is elastomers functionalized by chemical groups positioned along the macromolecular chain and/or at one or more of its ends (for example by functional groups capable of reacting with the surface of the silica), and halogenated polymers. Mention may be made of polyamides, ethylene homo- and copolymers, propylene homo- and copolymers.

The polymer (copolymer) can be a bulk polymer (copolymer), a polymer (copolymer) latex or else a solution of polymer (copolymer) in water or in any other appropriate dispersing liquid.

Among diene elastomers mention may be made, for example, of polybutadienes (BRs), polyisoprenes (IRs), butadiene copolymers, isoprene copolymers, or their mixtures, and in particular styrene/butadiene copolymers (SBRs, in particular ESBRs (emulsion) or SSBRs (solution)), isoprene/butadiene copolymers (BIRs), isoprene/styrene copolymers (SIRs), isoprene/butadiene/styrene copolymers (SBIRs), ethylene/propylene/diene terpolymers (EPDMs), and also the associated functionalized polymers (exhibiting, for example, pendant polar groups or polar groups at the chain end, which can interact with the silica).

Mention may also be made of natural rubber (NR) and epoxidized natural rubber (ENR).

The polymer compositions can be vulcanized with sulfur or crosslinked, in particular with peroxides or other crosslinking systems (for example diamines or phenolic resins).

In general, the polymer compositions additionally comprise at least one (silica/polymer) coupling agent and/or at least one covering agent; they can also comprise, inter alia, an antioxidant.

Non-limiting examples of suitable coupling agents are for instance "symmetrical" or "unsymmetrical" silane polysulfides; mention may more particularly be made of bis(($C_1$-$C_4$)alkoxyl($C_1$-$C_4$)alkylsilyl($C_1$-$C_4$)alkyl) polysulfides (in particular disulfides, trisulfides or tetrasulfides), such as, for example, bis(3-(trimethoxysilyl)propyl) polysulfides or bis(3-(triethoxysilyl)propyl) polysulfides, such as triethoxysilylpropyl tetrasulfide. Mention may also be made of monoethoxydimethylsilylpropyl tetrasulfide. Mention may also be made of silanes comprising masked or free thiol functional groups.

The coupling agent can be grafted beforehand to the polymer. It can also be employed in the free state (that is to say, not grafted beforehand) or grafted at the surface of the silica. It is the same for the optional covering agent.

The proportion by weight of the modified silica in the polymer composition can vary within a fairly wide range. It normally represents from 10% to 200% by weight, in particular from 20% to 150% by weight, especially from 20% to 80% by weight (for example from 30% to 70% by weight) or from 80% to 120% by weight (for example from 90% to 110% by weight), of the amount of the polymer(s).

The modified silica according to the invention can advantageously constitute all of the reinforcing inorganic filler and even all of the reinforcing filler of the polymer composition.

However, the modified silica according to the invention can optionally be combined with at least one other reinforcing filler, such as, in particular, a commercial highly dispersible silica, such as, for example, Zeosil® Z1165MP or Zeosil® Z1115MP (commercially available from Solvay), a treated precipitated silica (for example, a precipitated silica "doped" using a cation, such as aluminum); another reinforcing inorganic filler, such as, for example, alumina, indeed even a reinforcing organic filler, in particular carbon black (optionally covered with an inorganic layer, for example of silica). The silica according to the invention then preferably constitutes at least 50% by weight, indeed even at least 80% by weight, of the total amount of the reinforcing filler.

The compositions comprising the modified silica of the invention may be used for the manufacture of a number of articles. Non-limiting examples of finished articles comprising at least one of the polymer compositions described above are for instance of footwear soles, floor coverings, gas barriers, flame-retardant materials and also engineering components, such as rollers for cableways, seals for domestic electrical appliances, seals for liquid or gas pipes, braking system seals, pipes (flexible), sheathings (in particular cable sheathings), cables, engine supports, battery separators, conveyor belts, transmission belts or, preferably, tires, in particular tire treads (especially for light vehicles or for heavy-goods vehicles, e.g. trucks).

The invention will be now described in more detail with reference to the following examples whose purpose is merely illustrative and not limitative of the scope of the invention.

EXAMPLES

EXAMPLES 1 AND 2

Zeosil®1165MP (commercially available form Solvay) having a BET specific surface of 153 m²/g; a CTAB specific surface of 160 m²/g; a Al content of 0.33% by weight; a dispersive component of the surface energy $\gamma_s^d$ of 48 mJ/m² and a ratio V2/V1 of 60 was used as a starting material for the preparation of a modified silica.

A solution in water (at 34 wt%) of a polycarboxylic acid mixture was prepared by dissolving (at 35°C) a mixture of polycarboxylic acids having the following composition: 94.8 wt% of 2-methylglutaric acid, 4.9 wt% of ethylsuccinic anhydride, and 0.2 wt% of adipic acid and 0.1 wt% of others and then adjusting the pH to 6.5 with a 10M solution of NaOH.

400 g of Zeosil®1165MP were placed in a blade mixer (WAM MAP MLH 631002, internal volume 2 l). The solution of the polycarboxylic acid mixture was injected into the mixer operating at 150 rpm through a nozzle at a pressure of 1 bar and at room temperature. The injection operation was carried out over a period 5 minutes at an injection rate of 3.3 ml/min to obtain a polycarboxylic acid/$SiO_2$ weight ratio of 1.0%.

Following a similar procedure a modified silica having a polycarboxylic acid /$SiO_2$ weight ratio of 1.5% was obtained by injecting a polycarboxylic acid mixture prepared by dissolving (at 35°C) a mixture of polycarboxylic acids having the following composition: 94.8 wt% of 2-methylglutaric acid, 4.9 wt% of ethylsuccinic anhydride, and 0.2 wt% of adipic acid and 0.1 wt% of others at an injection rate of 3.6 ml/min for 5 minutes.

The characteristics of the inventive silica S1 and S2 obtained (in the form of substantially spherical beads) were the following:

|  | S1 | S2 |
|---|---|---|
| Content of carboxylic acid + carboxylate (C) (%) | 0.25 | 0.37 |
| BET ($m^2$/g) | 148 | 145 |
| CTAB ($m^2$/g) | 153 | 157 |
| $\gamma_s^d$ (mJ/$m^2$) | 36 | 33 |
| Water uptake (%) | 9.5 | 8.9 |
| V2/V1 (%) | 59 | 60 |
| pH | 6.1 | 4.6 |

EXAMPLES 3 AND 4 AND COMPARATIVE EXAMPLE 1

The following materials were used in the preparation of SBR-based elastomeric compositions:

SBR: SBR Buna VSL5025-2 from Lanxess; with 50 +/- 4% of vinyl units; 25 +/- 2% of styrene units; Tg in the vicinity of -20°C; 100 phr of SBR extended with 37.5 +/- 2.8% by weight of oil/
BR: oil Buna CB 25 from Lanxess
CS1: Silica Zeosil®1165 MP commercially available from Solvay
S1: Modified silica prepared according to the process present invention as described in Example 1
S2: Modified silica prepared according to the process present invention as described in Example 2
Coupling agent: Luvomaxx TESPT from Lehvoss France sari
Plasticizer: Nytex 4700 naphtenic plasticizer from Nynas
Antioxidant: N-(1,3-Dimethylbutyl)-N-phenyl-para-phenylenediamine ; Santoflex 6-PPD from Flexsys
DPG: Diphenylguanidine; Rhenogran DPG-80 from RheinChemie
CBS: N-Cyclohexyl-2-benzothiazolesulfenamide; Rhenogran CBS-80 from RheinChemie

The compositions of the elastomeric blends, expressed as parts by weight per 100 parts of elastomers (phr), are shown in Table I below, were prepared in an internal mixer of Brabender type (380 ml) according to the following procedure.

The preparation the compositions was carried out in two successive preparation phases: a first phase consisting of a high-temperature thermomechanical working, followed by a second phase of mechanical working at temperatures of less than 110°C. This phase makes it possible the introduction of the vulcanization system.

The first phase was carried out using a mixing device, of internal mixer type, of Brabender brand (capacity of 380 ml). The filling coefficient was 0.6. The initial temperature and the speed of the rotors were set on each occasion so as to achieve mixture dropping temperatures of approximately 140-170°C.

During the first phase it was possible to incorporate, in a first pass, the elastomers and then the reinforcement filler (introduction in instalments) with the coupling agent and stearic acid. For this pass, the duration was between 4 and 10 minutes.

After cooling the mixture (to a temperature of less than 100°C), a second pass made it possible to incorporate zinc oxide and the protecting agents/antioxidant. The duration of this pass was between 2 and 5 minutes.

After cooling the mixture (to a temperature of less than 100°C), the vulcanization system (sulfur and accelerators, such as CBS) was added to the mixture. The second phase was carried out in an open mill, preheated to 50°C. The duration of this phase was between 2 and 6 minutes.

Each final mixture was subsequently calendered in the form of plaques with a thickness of 2-3 mm.

Table I

| Composition | Example 3 | Example 4 | Comparative Ex. 1 |
|---|---|---|---|
| SBR | 103.0 | 103.0 | 103.0 |
| BR | 25.0 | 25.0 | 25.0 |
| S1 | 80.0 | | |
| S2 | | 80.0 | |
| CS1 | | | 80.0 |
| Coupling agent | 6.4 | 6.4 | 6.4 |
| Plasticizer | 7.0 | 7.0 | 7.0 |
| Carbon black (N330) | 3.0 | 3.0 | 3.0 |
| ZnO | 2.5 | 2.5 | 2.5 |
| Stearic acid | 2.0 | 2.0 | 2.0 |
| Antioxidant | 1.9 | 1.9 | 1.9 |
| DPG | 1.5 | 1.5 | 1.5 |
| CBS | 2.0 | 2.0 | 2.0 |
| Sulphur | 1.1 | 1.1 | 1.1 |

Subsequently, the mechanical and dynamic properties of the mixtures vulcanized at the curing optimum (T98) were measured according to the following general procedure.

### Rheological properties

### Viscosity of the raw mixtures

The Mooney viscosity was measured on the compositions in the raw state at 100°C using an MV 2000 rheometer. Mooney stress-relaxation rate was according to the standard NF ISO 289.

The value of the torque, read at the end of 4 minutes after preheating for one minute (Mooney Large (1+4) - at 100°C), is shown in Table II. The test was carried out on the raw mixtures after aging for 3 weeks at a temperature of 23 +/- 3°C.

Table II

| Compositions | | Example 3 | Example 4 | Comp. Example 1 |
|---|---|---|---|---|
| ML (1+4) - 100°C | Initial | 74 | 73 | 82 |
| Mooney relaxation | Initial | 0.340 | 0.324 | 0.304 |
| ML (1+4) - 100°C | After 7 days (23 +/- 3°C) | 83 | 83 | 102 |
| Mooney relaxation | After 7 days (23 +/- 3°C) | 0.297 | 0.284 | 0.233 |
| ML (1+4)-100°C | After 21 days (23 +/- 3°C) | 83 | 82 | 104 |
| Mooney relaxation | After 21 days (23 +/- 3°C) | 0.295 | 0.288 | 0.250 |

Compositions comprising the modified silicas S1 and S2 of the present invention have a significantly reduced initial raw viscosity with respect to compositions comprising a precipitated silica of the prior art (Comp. Ex. 1). The reduced viscosity of the compositions comprising the silica S1 and S2 with respect to reference compositions is maintained more constant even after ageing. A satisfactory Mooney relaxation over time is also observed.

### Rheometry Testing

The measurements were carried out on the compositions described above in the raw state. Rheology testing was carried out at 160°C using a Monsanto ODR rheometer according to standard NF ISO 3417. According to this test, the composition was placed in the test chamber (completely filling the chamber) regulated at the temperature of 160°C for 30 minutes, and the resistive torque opposed by the composition to a low-amplitude (3°) oscillation of a biconical rotor included in the test chamber was measured.

The following parameters were determined from the curve of variation in the torque as a function of time:

- the minimum torque (Tmin), which reflects the viscosity of the composition at the temperature under consideration;
- the maximum torque (Tmax);
- the delta torque ($\Delta T$ = Tmax - Tmin), which reflects the degree of crosslinking brought about by the action of the crosslinking system and, when needed, of the coupling agents;
- the time T98 necessary to obtain a degree of vulcanization corresponding to 98% of complete vulcanization (this time is taken as vulcanization optimum); and
- the scorch time TS2, corresponding to the time which is required increase the torque of 2 points above the minimum torque at the temperature under consideration (160°C) and which reflects the time during which it is possible to process the raw mixture at this temperature without having initiation of vulcanization.

The results obtained for the compositions of Examples 3 and 4 and Comparative Example 1 are shown in Table III.

Table III

|  | Example 3 | Example 4 | Comparative Example 1 |
|---|---|---|---|
| Tmin (dN.m) | 15.5 | 14.8 | 17.9 |
| Tmax (dN.m) | 59.3 | 59.5 | 59.2 |
| Delta torque (dN.m) | 43.8 | 44.7 | 41.3 |
| TS2 (min) | 5.4 | 5.9 | 4.0 |
| T98 (min) | 23.6 | 24.4 | 26.7 |
| T98-T2 (min) | 11.1 | 12.0 | 14.0 |

It was found that the compositions comprising the modified silica of the invention (Examples 3 and 4) exhibit a satisfactory combination of rheological properties.

In particular, while having a reduced raw viscosity (as discussed above), they showed a lower minimum torque value, which reflects a greater processability of the composition.

The higher scorch time of the compositions of Examples 3 and 4 also indicate that said compositions are easier to process with respect to the compositions using non-modified silica of the prior art.

**Determination of the Mechanical properties**

The measurements were carried out on the optimally vulcanized compositions (T98) obtained at a temperature of 160°C.

Uniaxial tensile tests were carried out in accordance with standard NF ISO 37 with test specimens of H2 type at a rate of 500 mm/min on an Instron 5564 device. The x% moduli, corresponding to the stress measured at x% of tensile strain, were expressed in MPa.

A reinforcing index (RI) was determined which is equal to the ratio of the modulus at 300% strain to the modulus at 100% strain.

The Shore A hardness measurement on the vulcanisates was carried out according to standard ASTM D 2240, using a measurement time of 15 seconds. The properties are reported in Table IV.

Table IV

| Compositions | Example 3 | Example 4 | Comp. Example 1 |
|---|---|---|---|
| 10% Modulus (MPa) | 0.4 | 0.4 | 0.5 |
| 100% Modulus (MPa) | 2.1 | 2.1 | 2.1 |
| 300% Modulus (MPa) | 12.1 | 11.6 | 11.6 |

(continued)

| Compositions | Example 3 | Example 4 | Comp. Example 1 |
|---|---|---|---|
| Resistance at break (MPa) | 19.2 | 18.1 | 18.4 |
| Deformation at break (%) | 407 | 401 | 406 |
| RI | 5.8 | 5.5 | 5.5 |
| Shore A hardness - 15 s (pts) | 57 | 57 | 59 |

It was found that the compositions comprising the modified silica of the invention (Examples 3 and 4) exhibit a good compromise in mechanical properties, with respect to what is obtained with the reference composition.

**Determination of the dynamic properties**

The dynamic properties were measured on a viscosity analyser (Metravib VA3000) according to standard ASTM D5992.

The values for loss factor (tan $\delta$) and compressive dynamic complex modulus (E*) were recorded on vulcanized samples (cylindrical test specimen with a cross section of 95 mm$^2$ and a height of 14 mm). The sample was subjected at the start to a 10% pre-strain and then to a sinusoidal strain in alternating compression of plus or minus 2%. The measurements were carried out at 60°C and at a frequency of 10 Hz. The data obtained for the compositions of Examples 3 and 4 and Comparative Example 1 are reported in Table V.

Table V

| Compositions | Example 3 | Example 4 | Comparative Example 1 |
|---|---|---|---|
| E*, 60°C, 10 Hz (MPa) | 6.4 | 6.6 | 7.2 |
| Tan $\delta$, 60°C, 10 Hz | 0.118 | 0.120 | 0.137 |

The use of the modified silica S1 and S2 of the present invention (Examples 3 and 4) makes it possible to improve the maximum value of the loss factor with respect to the control mixture.

The data in Tables II to V show that compositions comprising the modified silica of the invention are characterized by a good compromise among processing, reinforcement and hysteresis properties, with respect to reference compositions, in particular with a gain in raw viscosity, scorch time and vulcanization speed.

EXAMPLE 5

Zeosil®165GR (commercially available form Solvay) having a BET specific surface of 154 m$^2$/g; a CTAB specific surface of 150 m$^2$/g and a Al content of 0.32% by weight was used as a starting material for the preparation of a modified silica.

A solution in water (at 34 wt%) of a polycarboxylic acid mixture was prepared by dissolving (at 35°C) a mixture of polycarboxylic acids having the following composition: 94.8 wt% of 2-methylglutaric acid, 4.9 wt% of ethylsuccinic anhydride, and 0.2 wt% of adipic acid and 0.1 wt% of others.

700 g of Zeosil®165GR were placed in a mixer. The solution of the polycarboxylic acid mixture was injected into the mixer through a nozzle at a pressure of 1 bar and at room temperature. The injection operation was carried out over a period 12 minutes at an injection rate of 2 ml/min to obtain a polycarboxylic acid/SiO$_2$ weight ratio of 1.2%.

The characteristics of the inventive silica S3 obtained (in the form of substantially spherical beads) were the following:

| | S3 |
|---|---|
| Content of carboxylic acid + carboxylate (C) (%) | 0.42 |
| BET (m$^2$/g) | 158 |
| CTAB (m$^2$/g) | 160 |
| $\gamma_s^d$ (mJ/m$^2$) | 36 |

(continued)

|  | S3 |
|---|---|
| Water uptake (%) | 8.7 |

EXAMPLE 6 AND COMPARATIVE EXAMPLE 2

Following the procedure of Examples 3 and 4 and using the same materials the following SBR-based elastomeric compositions were prepared, wherein CS2 identifies Zeosil®165GR.

Table VI

| Composition | Example 6 | Comparative Ex. 2 |
|---|---|---|
| SBR | 103.0 | 103.0 |
| BR | 25.0 | 25.0 |
| S3 | 80.0 | |
| CS2 | | 80.0 |
| Coupling agent | 6.4 | 6.4 |
| Plasticizer | 7.0 | 7.0 |
| Carbon black (N330) | 3.0 | 3.0 |
| ZnO | 2.5 | 2.5 |
| Stearic acid | 2.0 | 2.0 |
| Antioxidant | 1.9 | 1.9 |
| DPG | 1.5 | 1.5 |
| CBS | 2.0 | 2.0 |
| Sulphur | 1.1 | 1.1 |

Subsequently, the mechanical and dynamic properties of the mixtures vulcanized at the curing optimum (T98) were measured according to the general procedure described above. The results are reported in Tables VII to X.

Table VII

| Compositions | | Example 6 | Comp. Example 2 |
|---|---|---|---|
| ML (1+4) - 100°C | Initial | 75 | 80 |
| Mooney relaxation | Initial | 0.336 | 0.322 |
| ML (1+4) - 100°C | After 8 days (23 +/- 3°C) | 77 | 86 |
| Mooney relaxation | After 8 days (23 +/- 3°C) | 0.327 | 0.300 |

Compositions comprising the modified silica S3 has a lower initial raw viscosity with respect to the composition comprising a precipitated silica of the prior art (Comp. Ex. 2).

Table VIII

|  | Example 6 | Comparative Example 2 |
|---|---|---|
| Tmin (dN.m) | 15.8 | 16.6 |
| Tmax (dN.m) | 58.5 | 65.5 |
| Delta torque (dN.m) | 42.7 | 48.9 |
| TS2 (min) | 5.8 | 4.4 |
| T98 (min) | 26.7 | 20.5 |
| T98-T2 (min) | 21.0 | 16.1 |

It was found that the compositions comprising the modified silica of the invention (Example 6) showed a lower minimum torque value, which reflects a greater processability of the composition.

Table IX

| Compositions | Example 6 | Comp. Example 2 |
|---|---|---|
| 10% Modulus (MPa) | 0.6 | 0.6 |
| 100% Modulus (MPa) | 2.5 | 2.4 |
| 300% Modulus (MPa) | 12.9 | 11.9 |
| Resistance at break (MPa) | 21.4 | 20.9 |
| Deformation at break (%) | 433 | 450 |
| RI | 5.2 | 5.0 |
| Shore A hardness - 15 s (pts) | 57 | 58 |

Table X

| Compositions | Example 6 | Comparative Example 2 |
|---|---|---|
| E*, 60°C, 10 Hz (MPa) | 6.3 | 6.6 |
| Tan $\delta$, 60°C, 10 Hz | 0.116 | 0.117 |

The data in Tables VII to X show that compositions comprising the modified silica S3 of the invention are characterized by a gain in raw viscosity and scorch time, while maintaining mechanical and dynamic properties.

## Claims

1. A process for the production of modified silica comprising the steps of:

   - providing a precipitated silica; and
   - adsorbing on said precipitated silica at least one polycarboxylic acid selected from the group consisting of malonic acid, tricarballylic acid, glutaric acid, adipic acid, pimelic acid, suberic acid, azelaic acid, sebacic acid, methylsuccinic acid, ethylsuccinic acid, oxalosuccinic acid, methylglutaric acid, dimethylglutaric acid, methyladipic acid,

   wherein adsorption is obtained by impregnating granules or beads of the precipitated silica with the at least one polycarboxylic acid in the liquid state or in a form in which it is dispersed or in solution in a solvent.

2. The process of claim 1 wherein the precipitated silica has a BET between 45 and 700 $m^2$/g.

3. The process according to anyone of the preceding claims wherein the at least one polycarboxylic acid is selected from the group consisting of methyladipic acid, methylsuccinic acid, ethylsuccinic acid, methylglutaric acid, dimethylglutaric acid.

4. The process according to anyone of the preceding claims wherein the amount of the at least one polycarboxylic acid adsorbed on the silica is such that the total content (C) of the at least one carboxylic acid and/or of its corresponding carboxylate, expressed as total carbon, is of at least 0.15% by weight with respect to the amount of silica (expressed as $SiO_2$).

5. The process according to anyone of the preceding claims which comprises the step of preparing a precipitated silica by a precipitation reaction between a silicate and an acidifying agent, to obtain a silica suspension, recovering the silica from the suspension and drying the silica.

6. A modified precipitated silica comprising at least 0.15% by weight expressed as total carbon with respect to the amount of silica (expressed as $SiO_2$) of at least one adsorbed polycarboxylic acid and/or of its corresponding carboxylate obtained by the process of anyone of claims 1 to 5 wherein the at least one adsorbed polycarboxylic acid and/or carboxylate is selected from the group consisting of tricarballylic acid, methylsuccinic acid, ethylsuccinic acid, oxalosuccinic acid, methylglutaric acid, dimethylglutaric acid, methyladipic acid.

7. The modified silica of claim 6 wherein the at least one adsorbed polycarboxylic acid is selected from the group consisting of methyladipic acid, methylsuccinic acid, ethylsuccinic acid, methylglutaric acid, dimethylglutaric acid.

8. Use as reinforcing filler for polymers of the modified silica obtained by the process of anyone of claims 1 to 5 or of anyone of claims 6 to 7

9. A polymer composition comprising the modified silica obtained by the process of anyone of claims 1 to 5 or of anyone of claims 6 to 7.

10. An article comprising at least one composition as claimed in claim 9.

11. The article of claim 10 consisting of a footwear sole, a floor covering, a gas barrier, a flame-retardant material, a roller for cableways, a seal for domestic electrical appliances, a seal for liquid or gas pipes, a braking system seal, a pipe, a sheathing, a cable, an engine support, a battery separator, a conveyor belt, a transmission belt or, preferably, a tire.

**Patentansprüche**

1. Verfahren zur Herstellung von modifizierter Kieselsäure, das folgende Schritte umfasst:

    - Bereitstellen einer Fällungskieselsäure; und
    - Adsorbieren mindestens einer Polycarbonsäure aus der Gruppe bestehend aus Malonsäure, Tricarballylsäure, Glutarsäure, Adipinsäure, Pimelinsäure, Suberinsäure, Azelainsäure, Sebacinsäure, Methylbernsteinsäure, Ethylbernsteinsäure, Oxalbernsteinsäure, Methylglutarsäure, Dimethylglutarsäure und Methyladipinsäure an der Fällungskieselsäure,

    wobei die Adsorption durch Imprägnieren von Körnern oder Perlen der Fällungskieselsäure mit mindestens einer Polycarbonsäure in flüssigem Zustand oder in einer Form, in der sie in einem Lösungsmittel dispergiert oder gelöst ist, erhalten wird.

2. Verfahren nach Anspruch 1, bei dem die Fällungskieselsäure einen BET-Wert zwischen 45 und 700 $m^2$/g aufweist.

3. Verfahren nach einem der vorhergehenden Ansprüche, bei dem die mindestens eine Polycarbonsäure aus der Gruppe bestehend aus Methyladipinsäure, Methylbernsteinsäure, Ethylbernsteinsäure, Methylglutarsäure und Dimethylglutarsäure ausgewählt wird.

4. Verfahren nach einem der vorhergehenden Ansprüche, bei dem die Menge der an der Kieselsäure absorbierten Polycarbonsäure so beschaffen ist, dass der Gesamtgehalt (C) der mindestens einen Carbonsäure und/oder ihres entsprechenden Carboxylats, ausgedrückt als Gesamtkohlenstoff, mindestens 0,15 Gew.-%, bezogen auf die Menge an Kieselsäure (ausgedrückt als $SiO_2$), beträgt.

5. Verfahren nach einem der vorhergehenden Ansprüche, umfassend den Schritt des Herstellens einer Fällungskieselsäure durch eine Fällungsreaktion zwischen einem Silikat und einem Ansäuerungsmittel zum Erhalt einer Kieselsäuresuspension, Gewinnen der Kieselsäure aus der Suspension und Trocknen der Kieselsäure.

6. Modifizierte Fällungskieselsäure, umfassend mindestens 0,15 Gew.-%, ausgedrückt als Gesamtkohlenstoff, bezogen auf die Menge an Kieselsäure (ausgedrückt als $SiO_2$), mindestens einer adsorbierten Polycarbonsäure und/oder ihres entsprechenden Carboxylats, erhalten durch das Verfahren nach einem der Ansprüche 1 bis 5, wobei die mindestens eine adsorbierte Polycarbonsäure und/oder das mindestens eine adsorbierte Carboxylat aus der Gruppe bestehend aus Tricarballylsäure, Methylbernsteinsäure, Ethylbernsteinsäure, Oxalbernsteinsäure, Methylglutarsäure, Dimethylglutarsäure und Methyladipinsäure ausgewählt ist.

**7.** Modifizierte Kieselsäure nach Anspruch 6, wobei die mindestens eine adsorbierte Polycarbonsäure aus der Gruppe bestehend aus Methyladipinsäure, Methylbernsteinsäure, Ethylbernsteinsäure, Methylglutarsäure und Dimethylglutarsäure ausgewählt ist.

**8.** Verwendung der durch das Verfahren nach einem der Ansprüche 1 bis 5 erhaltenen modifizierten Kieselsäure oder der modifizierten Kieselsäure nach einem der Ansprüche 6 bis 7 als verstärkender Füllstoff für Polymere.

**9.** Polymerzusammensetzung, umfassend die nach dem Verfahren nach einem der Ansprüche 1 bis 5 erhaltene modifizierte Kieselsäure oder die modifizierte Kieselsäure nach einem der Ansprüche 6 bis 7.

**10.** Artikel, umfassend eine Zusammensetzung nach Anspruch 9.

**11.** Artikel nach Anspruch 10, bestehend aus einer Schuhsohle, einem Bodenbelag, einer Gasbarriere, einem Flammschutzmaterial, einer Rolle für Seilbahnen, einer Dichtung für Haushaltselektrogeräte, einer Dichtung für Flüssigkeits-oder Gasleitungen, einer Bremssystemdichtung, einem Rohr, einer Ummantelung, einem Kabel, einer Motoraufhängung, einem Batterieseparator, einem Förderriemen, einem Treibriemen oder vorzugsweise einem Reifen.


**Revendications**

**1.** Procédé pour la production de silice modifiée comprenant les étapes consistant à :

- fournir une silice précipitée ; et
- adsorber sur ladite silice précipitée au moins un acide polycarboxylique choisi dans le groupe constitué par l'acide malonique, l'acide tricarballylique, l'acide glutarique, l'acide adipique, l'acide pimélique, l'acide subérique, l'acide azélaïque, l'acide sébacique, l'acide méthylsuccinique, l'acide éthylsuccinique, l'acide oxalosuccinique, l'acide méthylglutarique, l'acide diméthylglutarique, l'acide méthyladipique,

dans lequel l'adsorption est obtenue par imprégnation de granulés ou billes de la silice précipitée avec l'au moins un acide polycarboxylique à l'état liquide ou sous une forme dans laquelle il est dispersé ou en solution dans un solvant.

**2.** Procédé selon la revendication 1 dans lequel la silice précipitée a une surface spécifique BET comprise entre 45 et 700 m$^2$/g.

**3.** Procédé selon l'une quelconque des revendications précédentes dans lequel l'au moins un acide polycarboxylique est choisi dans le groupe constitué par l'acide méthyladipique, l'acide méthylsuccinique, l'acide éthylsuccinique, l'acide méthylglutarique, l'acide diméthylglutarique.

**4.** Procédé selon l'une quelconque des revendications précédentes dans lequel la quantité de l'au moins un acide polycarboxylique adsorbé sur la silice est telle que la teneur totale (C) de l'au moins un acide carboxylique et/ou de son carboxylate correspondant, exprimée en termes de carbone total, est d'au moins 0,15 % en poids par rapport à la quantité de silice (exprimée en termes de SiO$_2$).

**5.** Procédé selon l'une quelconque des revendications précédentes qui comprend l'étape consistant à préparer une silice précipitée par une réaction de précipitation entre un silicate et un agent acidifiant, pour obtenir une suspension de silice, récupérer la silice à partir de la suspension et sécher la silice.

**6.** Silice précipitée modifiée comprenant au moins 0,15 % en poids en termes de carbone total par rapport à la quantité de silice (exprimée en termes de SiO$_2$) d'au moins un acide polycarboxylique adsorbé et/ou de son carboxylate correspondant obtenue par le procédé selon l'une quelconque des revendications 1 à 5 dans laquelle l'au moins un acide polycarboxylique et/ou carboxylate adsorbé est choisi dans le groupe constitué par l'acide tricarballylique, l'acide méthylsuccinique, l'acide éthylsuccinique, l'acide oxalosuccinique, l'acide méthylglutarique, l'acide diméthylglutarique, l'acide méthyladipique.

**7.** Silice modifiée selon la revendication 6 dans laquelle l'au moins un acide polycarboxylique adsorbé est choisi dans le groupe constitué par l'acide méthyladipique, l'acide méthylsuccinique, l'acide éthylsuccinique, l'acide méthylglutarique, l'acide diméthylglutarique.

**8.** Utilisation en tant que charge renforçante pour des polymères de la silice modifiée obtenue par le procédé selon l'une quelconque des revendications 1 à 5 ou selon l'une quelconque des revendications 6 à 7.

**9.** Composition de polymère comprenant la silice modifiée obtenue par le procédé selon l'une quelconque des revendications 1 à 5 ou selon l'une quelconque des revendications 6 à 7.

**10.** Article comprenant au moins une composition telle que revendiquée dans la revendication 9.

**11.** Article selon la revendication 10 constitué d'une semelle de chaussure, d'un revêtement de sol, d'une barrière aux gaz, d'un matériau ignifuge, d'un galet pour des moyens de transport par câble, d'un joint d'étanchéité pour des appareils électriques domestiques, d'un joint d'étanchéité pour des tuyaux transportant du liquide ou du gaz, d'un joint d'étanchéité de système de freinage, d'un tuyau, d'une gaine, d'un câble, d'un support de moteur, d'un séparateur de batterie, d'une bande transporteuse, d'une courroie de transmission ou, de préférence, d'un pneu.

## REFERENCES CITED IN THE DESCRIPTION

**Patent documents cited in the description**

- US 5800608 A
- US 2009214449 A
- WO 9952979 A
- EP 396450 A
- EP 520862 A
- EP 647591 A
- EP 670813 A
- EP 670814 A
- EP 901986 A

- EP 762992 A
- EP 762993 A
- EP 917519 A
- EP 983966 A
- EP 1355856 A
- WO 03016215 A
- WO 2009112458 A
- WO 2011117400 A

**Non-patent literature cited in the description**

- *The Journal of the American Chemical Society,* February 1938, vol. 60, 309

- **DORRIS ; GRAY METHOD.** *J. Colloid Interface Sci.,* vol. 77 (180), 353-362